# EUROPEAN PATENT APPLICATION

(11) **EP 2 256 546 A1**
(43) Date of publication of application: **01.12.2010**
(21) Application number: 09719697.6
(22) Date of filing: 12.03.2009
(51) Int. Cl.: G02F 1/17, G02F 1/1339, G02F 1/1345, G02F 1/167, G09F 9/37

(54) **INFORMATION DISPLAY PANEL**

(30) Priority: 12.03.2008 JP 2008063257
(71) Applicant: Bridgestone Corporation, Tokyo 104-8340 (JP)
(72) Inventor: SHOJI, Takanori, Kodaira-shi Tokyo 187-8531 (JP); KITA, Shinichi, Kodaira-shi Tokyo 187-8531 (JP); NISHII, Masayuki, Kodaira-shi Tokyo 187-8531 (JP)
(74) Representative: Oxley, Robin John George
(86) International application number: PCT/JP2009/054790
(87) International publication number: WO 2009/113626

(57) **Abstract**

In an information display panel having an information display portion, in which a voltage is applied between pixel electrodes arranged respectively to substrates and display media are driven so as to display information such as an image, the information display panel has: an electrode-wiring concentrated portion in which electrode-wirings derived from the pixel electrodes on both substrates are concentrated at the outer side of the information display portion so as to connect with a connecting terminal portion used for connecting with an external driving circuit; and a frame rib arranged outside of the information display portion; wherein the electrode-wirings connected to the pixel electrodes arranged on one substrate are electrically connected to the electrode-wirings on the other substrate, at the outer side of the information display portion by using a sealing agent including conductive particles, wherein a width of the frame rib corresponding to the electrode-wiring concentrated portion is formed wider than that of the other portion of the frame rib, wherein an opening at an end portion of the substrate corresponding to the electrode-wiring concentrated portion is filled by a moisture-proof material, and wherein the sealing agent including conductive particles is arranged at a portion other than the electrode-wiring concentrated portion.

## Description

### TECHNICAL FIELD

The present invention relates to an information display panel, in which display media constituted by electrically drivable particles are sealed between two substrates, at least one of two substrates being transparent, and, in which the display media are made to move, by applying a voltage between paired electrodes formed by arranging oppositely the pixel electrodes respectively arrange to the substrates, so as to display information such as an image.

### RELATED ART

Generally, there is known an information display panel, in which display media constituted by electrically drivable particles are sealed between a transparent front substrate and a rear substrate, and, in which the display media are made to move, by applying a voltage between paired electrodes formed by arranging oppositely the pixel electrodes respectively arrange to the substrates, so as to display information such as an image (booklet of international publication No. WO2005/062112).

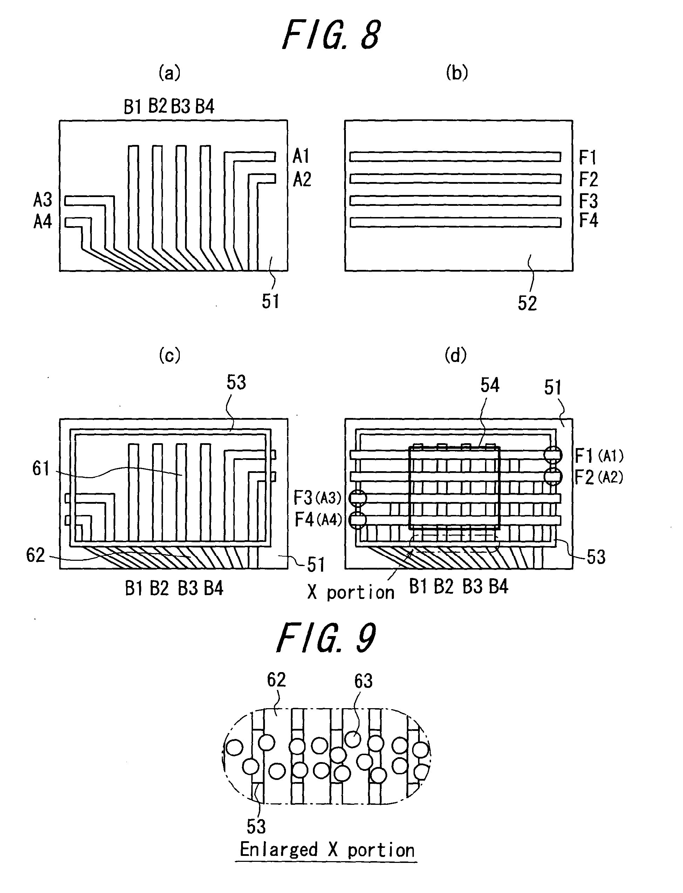

In the known information display panel mentioned above, it is necessary to connect the electrodes provided on the rear substrate and the electrodes provided on the transparent front substrate to connecting terminals of an external circuit at, for example, an end portion of the rear substrate. Figs. 8a to 8d are schematic views respectively showing one embodiment of a method of manufacturing the known information display panel. At first, as shown in Fig. 8a, a rear substrate 51 is prepared, on which electrodes B 1 - B4 for supplying power to cells forming respective information display portions and electrodes A1 - A4 for connecting the connecting terminals of the external circuit are arranged. In addition, as shown in Fig. 8b, a transparent front substrate 52 is prepared, on which transparent electrodes F1 - F4 for supplying power to the cells forming respective information display portions are arranged. Then, as shown in Fig. 8c, an anisotropic conductive sealing agent 53 made of an adhesive sealing agent including conductive particles is arranged on the rear substrate 51 at an outer portion of the information display portion. Finally, as shown in Fig. 8d, the rear substrate 51 and the front substrate 52 are stacked with each other through the sealing agent 53, so that the electrodes F1 - F4 of the front substrate 52 are electrically derived from the electrodes A1 - A4 of the rear substrate 51. The anisotropic conductive sealing agent 53 has conductivity only at the portions indicated by a symbol ○ at which the electrodes A1 - A4 and the electrodes F1 - F4 of the front substrate 52 are intersected. It should be noted that a numeral 54 shows the image display portion.

In the known information display panel having the construction mentioned above, since a gap between the front substrate 52 and the rear substrate 51 is wide as compared with the generally known liquid crystal display panel, it is necessary to use particles having a large diameter as the conductive particles constituting the sealing agent 53. Moreover, in order to seal the information display portion 54, it is necessary to arranged the sealing agent 53 including the conductive particles in such a manner that it surrounds overall outer portion of the information display portion 54.

Therefore, there is a drawback at for example X portion other than the portion (portions for electrically connecting the electrodes on respective substrates) indicated by the symbol ○ in Fig. 8d. That is, as shown in Fig. 9 as an enlarged view, there are conductive wires 62 in the outer side of the information display portion for introducing pixel electrodes 61 in the information display portion to the end portion of the panel. Among the conductive wires 62, there is a drawback such that a leak between adjacent conductive wires due to conductive particles 63 is liable to occur, since a space between adjacent conductive wires 62 corresponding to an arranging portion of the sealing agent 53 is not sometimes maintained sufficiently with respect to a dimension of the conductive particles 63.

### DISCLOSURE OF THE INVENTION

The present invention has for its object to eliminate the drawbacks mentioned above and to provide an information display panel, in which a leak does not occur between conductive wires even if electric conductions between the electrodes on the front substrate and the electrodes on the rear substrate and a seal of the information display panel are performed by using the sealing agent including the conductive particles in the information display panel of a display media driving type constituted by particles.

According to a first aspect of the invention, an information display panel having an information display portion, in which a voltage is applied between pixel electrodes arranged respectively to substrates and display media are driven so as to display information such as an image, is **characterized in that** the information display panel comprises: an electrode-wiring concentrated portion in which electrode-wirings derived from the pixel electrodes on both substrates are concentrated at the outer side of the information display portion so as to connect with a connecting terminal portion used for connecting with an external driving circuit; and a frame rib arranged outside of the information display portion; wherein the electrode-wirings connected to the pixel electrodes arranged on one substrate are electrically connected to the electrode-wirings on the other substrate, at the outer side of the information display portion by using a sealing agent including conductive particles, wherein a width of the frame rib corresponding to the electrode-wiring concentrated portion is formed wider than that of the other portion of the frame rib, and wherein the sealing agent including conductive particles is arranged at a portion other than the electrode-wiring concentrated portion.

According to a second aspect of the invention, an information display panel having an information display portion, in which a voltage is applied between pixel electrodes arranged respectively to substrates and display media are driven so as to display information such as an image, is **characterized in that** the information display panel comprises: an electrode-wiring concentrated portion in which electrode-wirings derived from the pixel electrodes on both substrates are concentrated at the outer side of the information display portion so as to connect with a connecting terminal portion used for connecting with an external driving circuit; and a frame rib arranged outside of the information display portion; wherein the electrode-wirings connected to the pixel electrodes arranged on one substrate are electrically connected to the electrode-wirings on the other substrate, at the outer side of the information display portion by using a sealing agent including conductive particles, wherein an opening at an end portion of the substrate corresponding to the electrode-wiring concentrated portion is filled by a moisture-proof material, and wherein the sealing agent including conductive particles is arranged at a portion other than the electrode-wiring concentrated portion.

According to a third aspect of the invention, an information display panel having an information display portion, in which a voltage is applied between pixel electrodes arranged respectively to substrates and display media are driven so as to display information such as an image, is **characterized in that** the information display panel comprises: an electrode-wiring concentrated portion in which electrode-wirings derived from the pixel electrodes on both substrates are concentrated at the outer side of the information display portion so as to connect with a connecting terminal portion used for connecting with an external driving circuit; and a frame rib arranged outside of the information display portion; wherein the electrode-wirings connected to the pixel electrodes arranged on one substrate are electrically connected to the electrode-wirings on the other substrate, at the outer side of the information display portion by using a sealing agent including conductive particles, wherein a width of the frame rib corresponding to the electrode-wiring concentrated portion is formed wider than that of the other portion of the frame rib, wherein an opening at an end portion of the substrate corresponding to the electrode-wiring concentrated portion is filled by a moisture-proof material, and wherein the sealing agent including conductive particles is arranged at a portion other than the electrode-wiring concentrated portion.

As a preferred embodiment of the information display panel according to the first to third aspects of the invention, a space between the substrates of the panel arranged between the sealing agent including conductive particles and the frame rib, and/or, a space between the substrates of the panel arranged between the sealing agent including conductive particles and the moisture-proof material, which are formed at an end portion of the panel, are sealed by a sealing agent.

According to the invention, since the electrode-wirings connected to the pixel electrodes arranged on one substrate are electrically connected to the electrode-wirings on the other substrate, at the outer side of the information display portion by using a sealing agent including conductive particles, and (1) a width of the frame rib corresponding to the electrode-wiring concentrated portion is formed wider than that of the other portion of the frame rib, (2) an opening at an end portion of the substrate corresponding to the electrode-wiring concentrated portion is filled by a moisture-proof material, and/or, (3) the sealing agent including conductive particles is arranged at a portion other than the electrode-wiring concentrated portion, it is possible to obtain an information display panel, in which a leak does not occur between conductive wires even if electric conductions between the electrodes on the front substrate and the electrodes on the rear substrate and a seal of the information display panel are performed by using the sealing agent including the conductive particles in the information display panel of a display media driving type constituted by particles.

### BRIEF DESCRIPTION OF THE DRAWINGS

[Fig. 1] Figs. 1a and 1b are schematic views respectively showing one embodiment of the information display panel according to the invention.
[Fig. 2] Fig. 2 is a schematic view illustrating another embodiment of the information display panel according to the invention.
[Fig. 3] Figs. 3a to 3d are schematic views respectively depicting still another embodiment of the information display panel according to the invention.
[Fig. 4] Figs. 4a and 4b are schematic views respectively explaining one embodiment of the information display panel according to the first aspect of the invention.
[Fig. 5] Figs. 5a and 5b are schematic views respectively explaining one embodiment of the information display panel according to the second aspect of the invention.
[Fig. 6] Figs. 6a and 6b are schematic views respectively explaining one embodiment of the information display panel according to the third aspect of the invention.
[Fig. 7] Fig. 7 is a schematic view showing one embodiment of partition shapes in the information display panel according to the invention.
[Fig. 8] Figs. 8a to 8d are schematic views respectively illustrating one embodiment of a method of manufacturing the known information display panel.
[Fig. 9] Fig. 9 is a schematic view explaining drawbacks of the known information display panel.

### BEST MODE FOR CARRYING OUT THE INVENTION

At first, a basic construction of an information display panel according to an electric-field driving type of charged particles will be explained as one embodiment of the information display panel according to the invention. In the information display panel mentioned above, an electrostatic field is applied from opposed electrode pair to the display media, constituted as the particles including charged particles, sealed between opposed two substrates. Along a direction of the applied electrostatic field, the display media are attracted by means of a force due to electrostatic field or Coulomb's force, and, the display media are moved reciprocally by varying a direction of the electrostatic field, so that information such as an image can be displayed. Therefore, it is necessary to design the information display panel in such a manner that the display media can move evenly and maintain stability during a reciprocal operation or during a display information reserving state. Here, as to forces applied to the particles constituting the display media, there are an attraction force between the particles due to Coulomb' force, an imaging force with respect to the electrode or the substrate, an intermolecular force, a liquid bonding force and a gravity.

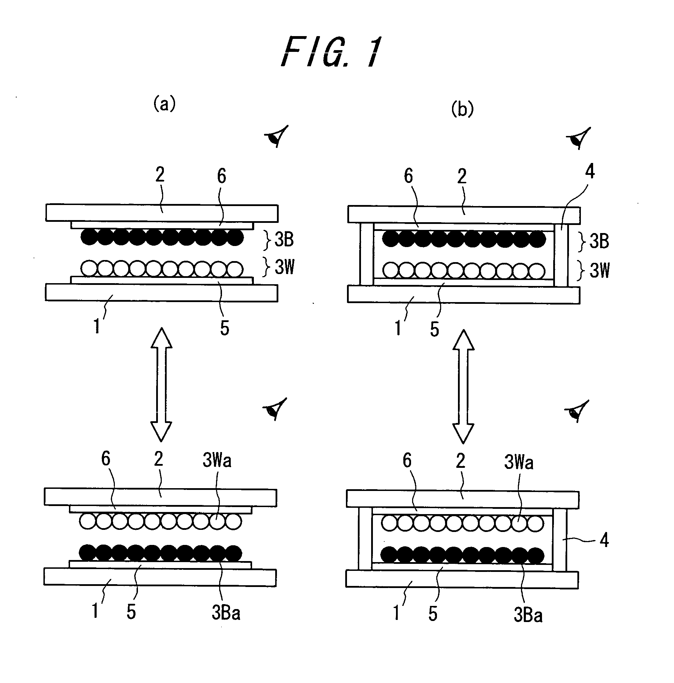

Examples of the information display panel according to the invention, which is an electric-field driving type of charged particles, will be explained with reference to Figs. 1a, 1b, Fig. 2 and Figs. 3a to 3d.

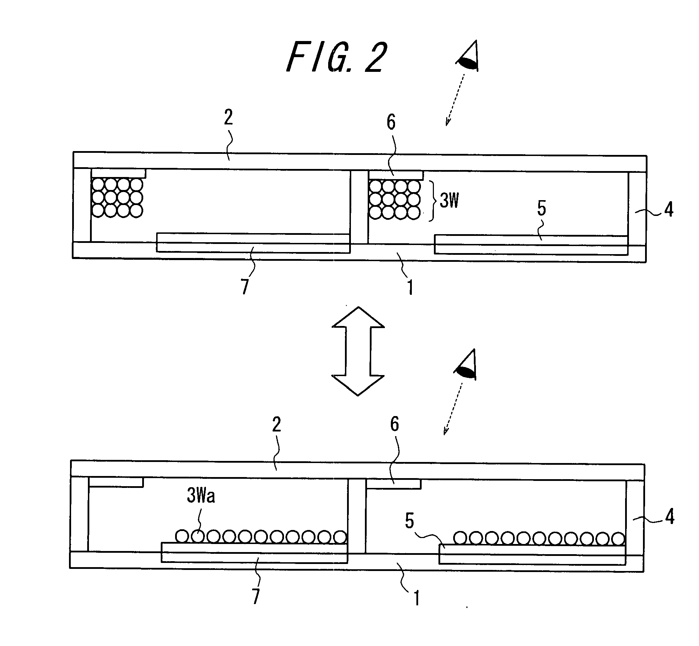

In the example shown in Figs. 1a and 1b, at least two groups of display media having different optical reflectance and different charge characteristics, which are constituted by particles including a particle having at least optical reflectance and charging properties (here, white color display media 3W constituted by the particles including a charged white particle 3Wa and black color display media 3B constituted by the particles including a charged black particle 3Ba are shown) are moved in a perpendicular direction with respect to substrates 1 and 2, in accordance with an electric field generated by applying a voltage between an electrode 5 arranged to the substrate 1 and an electrode 6 arranged to the substrate 2, so as to display a black color by viewing the black color display media 3B to an observer or so as to display a white color by viewing the white color display media 3W to the observer. In the example shown in Fig. 1b, a cell is formed by arranging for example grid-like partition walls 4 between the substrates 1 and 2. Moreover, Figs. 1a and 1b show an example of a discrete electrode, and Fig. 2 illustrates an example of a line electrode. Further, the electrode may be arranged outside of the substrate and may be embedded in the substrate. Moreover, in Fig. 1b, the partition walls arranged at the near side are omitted

In the example shown in Fig. 2, one group of display media constituted by particles including a particle having at least optical reflectance and charging properties (here, white color display media 3W constituted by the particles including a charged white color particle 3Wa are shown) is moved in a substantially parallel direction with respect to substrates 1 and 2, in accordance with an electric field generated by applying a voltage between the electrode 5 arranged to the substrate 1 and the electrode 6 arranged to the substrate 1, so as to display a white color by viewing the white color display media 3 W to an observer or so as to display a black color by viewing a color of a color plate 7 (in this case, black color) arranged under the transparent electrode 6 of the substrate 1 to the observer. In the example shown in Fig. 2, a cell is formed by arranging for example grid-like partition walls 4 between the substrates 1 and 2. Moreover, in Fig.2, the partition walls arranged at the near side are omitted.

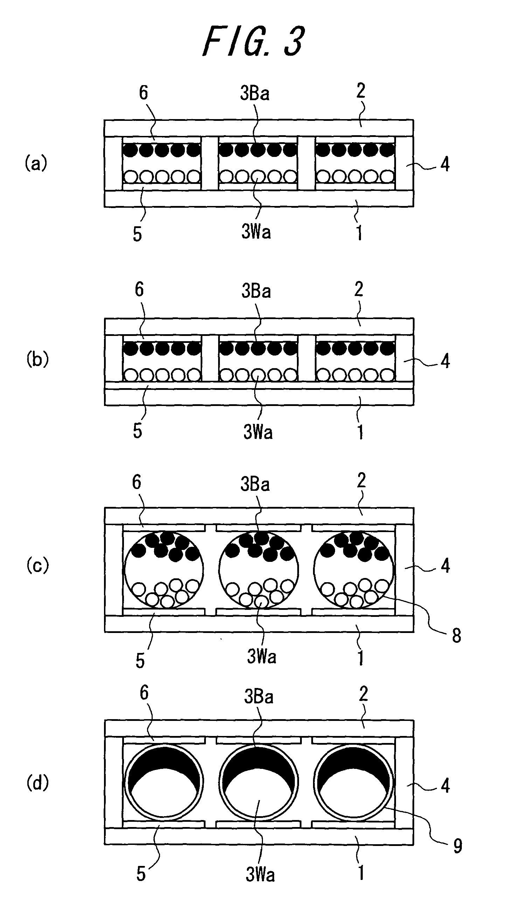

Figs. 3a to 3d are schematic views respectively showing still another embodiment of the information display panel according to the electric field driving type of the charged particles. In the embodiment shown in Fig. 3a, an example, such that the electrodes 5, 6 are constituted by an individual electrode among the information display panel according to the electric field driving type of the charged particles, is shown. In the embodiment shown in Fig. 3b, an example, such that the electrodes 5, 6 are constituted by a line electrode among the information display panel according to the electric field driving type of the charged particles, is shown. In the embodiment shown in Fig. 3c, an example, such that the electrodes 5, 6 are constituted by an individual electrode and the display media constituted by the electrically drivable particles are filled in a capsule 8 and are arranged between the substrates 1 and 2. In the embodiment shown in Fig. 3d, an example, such that the electrodes 5, 6 are constituted by an individual electrode and display media 9 of a rotating ball type in which charged polarity is different in half and half and a color thereof is half and half in white and black are sealed in a micro-capsule with a insulation liquid, is shown. The present invention can be preferably applied to each embodiment shown in Figs. 3a to 3d.

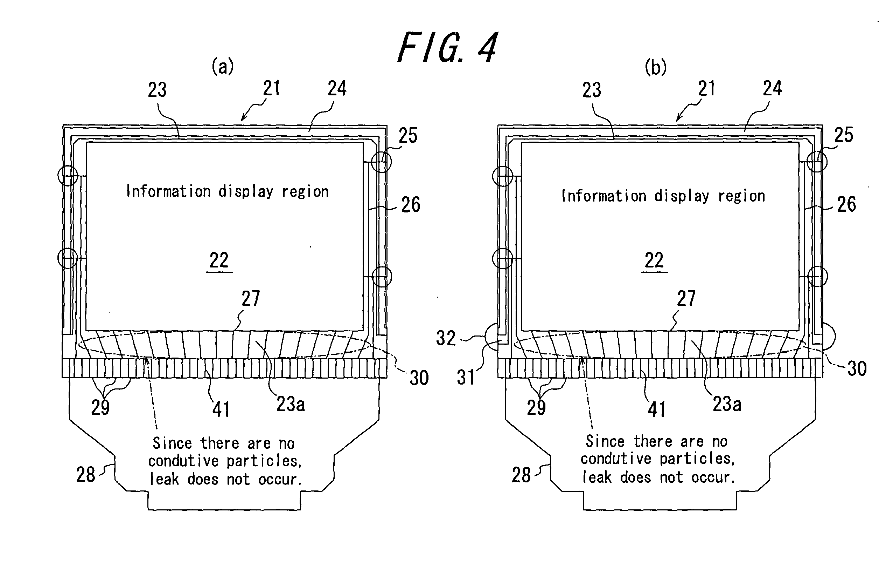

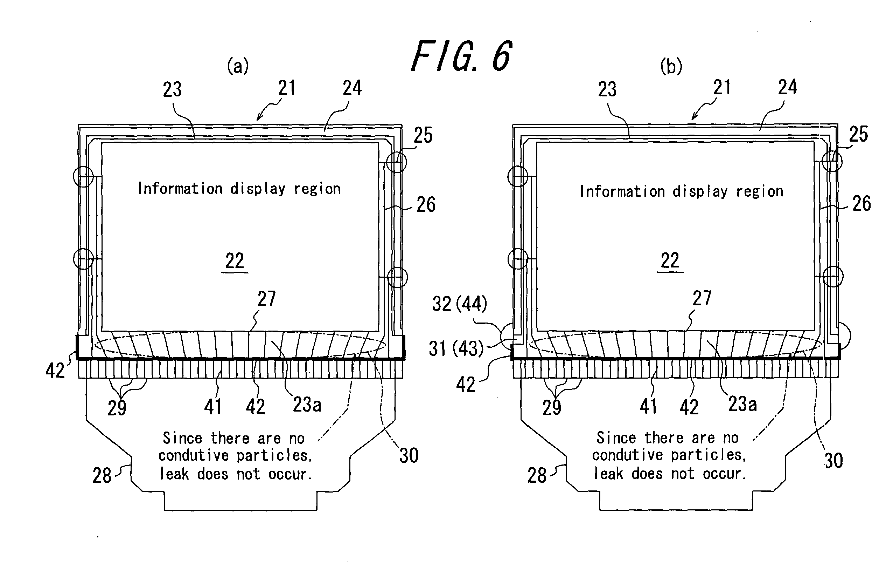

Figs. 4a, 4b to Figs. 6a, 6b are schematic views respectively explaining one embodiment of the information display panel according to the invention. In the embodiments shown in Figs. 4a, 4b to Figs. 6a, 6b, an electric conduction between the electrodes on the front substrate and the electrodes on the rear substrate is performed by the conductive particles, and, the sealing agent including the conductive particles is provided between the two substrates. These constructions are common to the examples shown in Figs. 8a to 8d as the known embodiment.

In the embodiments shown in Figs. 4a, 4b to Figs. 6a, 6b, a numeral 21 is an information display panel, a numeral 22 is an information display portion in which the display media for moving and displaying are arranged, a numeral 23 is a frame rib arranged at an outermost peripheral portion of the information display portion 22, a numeral 24 is a sealing agent including the conductive particles, a numeral 25 is electrode wirings derived from the pixel electrodes arranged on one substrate, a numeral 26 is electrode wirings arranged on the other substrate which is derived from the electrode wirings 25 on one substrate through the sealing agent 24 including the conductive particles, a numeral 27 is electrode wirings derived from the pixel electrodes arranged on the other substrate, a numeral 28 is a flexible printed circuit substrate (FPC substrate) in which a flexible cable used for connecting with the external circuit is arranged, a numeral 29 is an electrode terminal portion arranged at a side of the information display panel 21, which is connected to the flexible cable, a numeral 30 is an electrode-wiring concentrated portion in which all the electrode wirings 26, 27 derived from the pixel electrodes on both substrates are gathered. In the electrode-wiring concentrated portion 30, in order to connect with the electrode terminal portion 29, there is a portion in which a space between the electrode wirings becomes narrower than a particle diameter of the conductive particles in the sealing agent. In this case, at a portion indicated by a symbol ○, the electrode wirings 25 derived from the pixel electrodes on one substrate through the sealing agent 24 including the conductive particles are further introduced to the electrode wirings 26 on the other substrate. Hereinafter, the first aspect to the third aspect of the invention will be explained in this order.

### <First aspect of the invention>

Figs. 4a and 4b are schematic views respectively explaining one embodiment of the information display panel according to a first aspect of the invention. In the embodiment shown in Fig. 4a, the information display panel has an electrode-wiring concentrated portion 30 in which electrode-wirings 25, 26 derived from the pixel electrodes on both substrates are concentrated at the outer side of the information display portion 22 so as to connect with a connecting terminal portion 29 used for connecting with an external driving circuit, and a frame rib 23 arranged outside of the information display portion 22. Moreover, the electrode-wirings 25 connected to the pixel electrodes arranged on one substrate are electrically connected to the electrode-wirings 26 on the other substrate, at the outer side of the information display portion 22 by using the sealing agent 24 including conductive particles. Further, a width of frame rib 23a corresponding to the electrode-wiring concentrated portion 30 is formed wider than that of the other portion of the frame rib. Furthermore, the sealing agent 24 including conductive particles is arranged at a portion other than the electrode-wiring concentrated portion 30. In other words, in the electrode-wiring concentrated portion 30 arranged at an outer region of the information display portion 22, the sealing agent 24 including the conductive particles is not arranged, and a width of the frame rib 23a corresponding to the electrode-wiring concentrated portion 30 is formed wider than that of the other portion of the frame rib. In this embodiment, since the sealing agent 24 is not arranged at the portion of the electrode-wiring concentrated portion 30, there are no conductive particles and a leak between adjacent electrode wirings does not occur. On the other hand, a sealing of the portion, at which the sealing agent 24 is not arranged, can be performed by the frame rib 23a which is wider than the frame rib 23.

In the embodiment shown in Fig. 4b, a sealant 32 is arranged to a gap 31 between the sealing agent 24 including the conductive particles and the frame rib 23, and thus the gap 31 between the sealing agent 24 and the frame rib 23 is sealed, in addition to the embodiment shown in Fig. 4a. Therefore, this embodiment can obtain higher sealing properties as compared with the embodiment shown in Fig. 4a.

### <Second aspect of the invention>

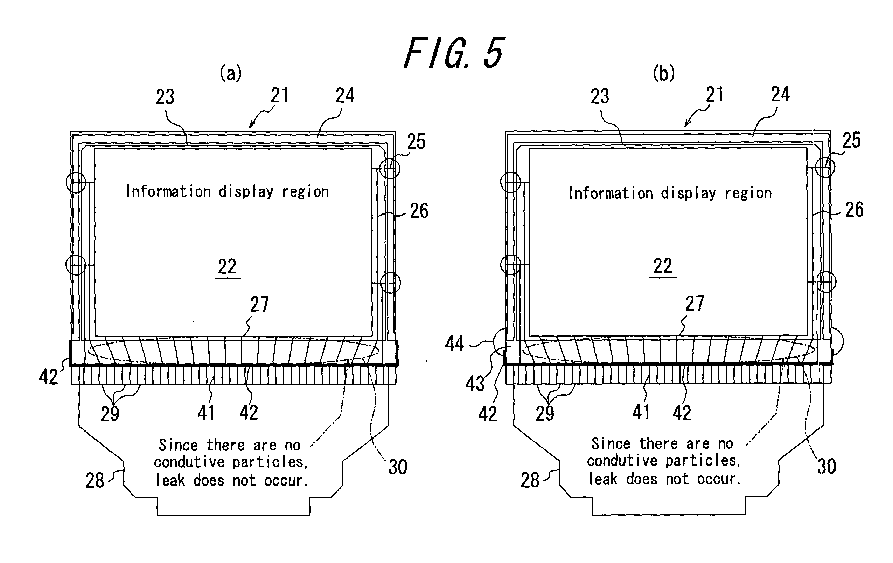

Figs. 5a and 5b are schematic views respectively explaining one embodiment of the information display panel according to a second aspect of the invention. In the embodiment shown in Fig. 5a, the information display panel has an electrode-wiring concentrated portion 30 in which electrode-wirings 25, 26 derived from the pixel electrodes on both substrates are concentrated at the outer side of the information display portion 22 so as to connect with a connecting terminal portion 29 used for connecting with an external driving circuit, and a frame rib 23 arranged outside of the information display portion 22. Moreover, the electrode-wirings 25 connected to the pixel electrodes arranged on one substrate are electrically connected to the electrode-wirings 26 on the other substrate, at the outer side of the information display portion 22 by using the sealing agent 24 including conductive particles. Further, an opening at an end portion 41 of the substrate corresponding to the electrode-wiring concentrated portion 30 is filled by a moisture-proof material 42. Furthermore, the sealing agent 24 including conductive particles is arranged at a portion other than the electrode-wiring concentrated portion 30. In other words, in the electrode-wiring concentrated portion 30 arranged at an outer region of the information display portion 22, the sealing agent 24 including the conductive particles is not arranged, and the opening at the end portion 41 of the substrate is filled by the moisture-proof material 42. In this embodiment, since the sealing agent 24 is not arranged at the portion of the electrode-wiring concentrated portion 30, there are no conductive particles and a leak between adjacent electrode wirings does not occur. On the other hand, a sealing of the portion, at which the sealing agent 24 is not arranged, can be performed by arranging the moisture-proof material 42 externally to overall opening of the end portion 41 of the substrate.

In the embodiment shown in Fig. 5b, a sealant 44 is arranged to a gap 43 between the sealing agent 24 including the conductive particles and the moisture-proof material 42, and thus the gap 43 between the sealing agent 24 and the moisture-proof material 42 is sealed, in addition to the embodiment shown in Fig. 5a. Therefore, this embodiment can obtain higher sealing properties as compared with the embodiment shown in Fig. 5a.

### <Third aspect of the invention>

Figs. 6a and 6b are schematic views respectively explaining one embodiment of the information display panel according to a third aspect of the invention. In the embodiment shown in Fig. 6a, the information display panel has an electrode-wiring concentrated portion 30 in which electrode-wirings 25, 26 derived from the pixel electrodes on both substrates are concentrated at the outer side of the information display portion 22 so as to connect with a connecting terminal portion 29 used for connecting with an external driving circuit, and a frame rib 23 arranged outside of the information display portion 22. Moreover, the electrode-wirings 25 connected to the pixel electrodes arranged on one substrate are electrically connected to the electrode-wirings 26 on the other substrate, at the outer side of the information display portion 22 by using the sealing agent 24 including conductive particles. Further, a width of frame rib 23a corresponding to the electrode-wiring concentrated portion 30 is formed wider than that of the other portion of the frame rib. Furthermore, an opening at an end portion 41 of the substrate corresponding to the electrode-wiring concentrated portion 30 is filled by a moisture-proof material 42. Moreover, the sealing agent 24 including conductive particles is arranged at a portion other than the electrode-wiring concentrated portion 30. In other words, in the electrode-wiring concentrated portion 30 arranged at an outer region of the information display portion 22, the sealing agent 24 including the conductive particles is not arranged, a width of the frame rib 23a corresponding to the electrode-wiring concentrated portion 30 is formed wider than that of the other portion of the frame rib and the opening at the end portion 41 of the substrate is filled by the moisture-proof material 42. On the other hand, a sealing of the portion, at which the sealing agent 24 is not arranged, can be performed by the frame rib 23a which is wider than the frame rib 23 and by arranging the moisture-proof material 42 externally to overall opening of the end portion 41 of the substrate.

In the embodiment shown in Fig. 6b, the sealant 32 is arranged to the gap 31 between the sealing agent 24 including the conductive particles and the frame rib 23, and the sealant 44 is arranged to the gap 43 between the sealing agent 24 including the conductive particles and the moisture-proof material 42. Therefore, the gap 31 between the sealing agent 24 and the frame rib 23 and the gap 43 between the sealing agent 24 and the moisture-proof material 42 are sealed, in addition to the embodiment shown in Fig. 6a.

In the information display panel according to the first to third aspects of the invention, use may be made of generally known materials as to the sealing agent 24 including the conductive particles, the sealant 32, 44, and the moisture-proof material 42. It is preferred to set a particle diameter of the conductive particles used for the sealing agent to a dimension of the gap between the substrates of the information display panel, and thus use may be made of the conductive particles having a particle diameter in a range of 10 - 50 µm and having a uniform particle diameter. Moreover, it is preferred to use the sealing agent including the conductive particles having a particle diameter suitable for a dimension of the gap between the substrates of the information display panel.

In the information display panel according to the invention, a gap between the opposed electrodes is designed in accordance with an average particle diameter of the particles for display media sealed in opposed electrode pair. If the particles for display media have an average particle diameter of 1 - 20 µm, it is preferred to set the gap between the opposed electrodes to 20 - 100 µm, preferably 30 - 50 µm.
The conductive particles included in the sealing agent according to the invention are particles in which a surface thereof is completely coated by a metal having excellent conductivity or particles made of a metal having excellent conductivity. In the conductive particles, there may be dispersed cavities or a hollow portion or no cavities. It is preferred to set a particle diameter of the conductive particles in a range of 1.0 - 1.2 times large with respect to the gap between the opposed electrodes. If it exceeds 1.2 times, there causes sometimes drawback such that laminated substrates of the information display panel peel off since a force for expanding two substrates, to which the electrodes are arranged, becomes larger. If it is less than 1.0 times, there causes sometimes drawback such that there is no electric conduction between the electrodes.
The content of the conductive particles may be set to 1 - 30 parts preferably 5 - 10 parts with respect to 100 parts by weight of the sealing agent. As for conductive materials constituting at least a surface layer of the conductive particles, use may be preferably made of metals such as silver, gold, copper, nickel, aluminum, chromium, platinum, iron and so on, or an alloy including the above material as a main ingredient (for example, neodymium-chromium (Nd-Cr) and so).

Hereinafter, respective members constituting the information display panel according to the invention will be explained.

As the substrate, at least one of the substrates is the transparent substrate 2 through which a color of the display media can be observed from outside of the panel, and it is preferred to use a material having a high transmission factor of visible light and an excellent heat resistance. The other substrate 1 may be transparent or may be opaque. Examples of the substrate material include polymer such as polyethylene terephthalate, polyethylene naphthalate, polyether sulfone, polyethylene, polycarbonate, polyimide or acryl and metal having flexibility and glass, quartz, rigid plastic having no flexibility. The thickness of the substrate is preferably 2 to 5000 µm, more preferably 5 to 2000 µm. When the thickness is too thin, it becomes difficult to maintain strength and distance uniformity between the substrates, and when the thickness is thicker than 5000 µm, there is a drawback as a thin-type information display panel.

As a material of the electrode, use is made of metals such as aluminum, silver, nickel, copper, gold, or, conductive metal oxides such as indium tin oxide (ITO), zinc-doped indium oxide (IZO), aluminum-doped zinc oxide (AZO), indium oxide, conductive tin oxide, antimony tin oxide (ATO), conductive zinc oxide and so on, or, conductive polymers such as polyaniline, polypyrrole, polythiophene and so on, and they are used by being suitably selected As an electrode forming method, use is made of a method in which the materials mentioned above are made to a thin film by means of sputtering method, vacuum vapor deposition method, CVD (chemical vapor deposition) method, coating method and so on, or, a method in which a metal foil (for example, rolled copper foil) is laminated, or, a method in which conductive materials and solvents are mixed with synthetic resin binder and the mixture is sprayed to perform pattering. It is necessary to use a transparent electrode for the electrode arranged to the substrate 2 at an observed side which needs a transparency, but it is not necessary to use a transparent substrate for the electrode arranged to substrate 1 at a rear side. In both cases, the materials mentioned above, which are transparent and have a pattern formation capability, can be suitably used. Additionally, the thickness of the electrode may be suitable unless the electroconductivity is absent or any hindrance exists in optical transparency, and it is preferable to be 0.01 - 10 µm, more preferable to be 0.05 - 10 µm. The material and thickness of the electrode arranged to the rear substrate 1 are the same as those of the electrode arranged to the front substrate at an observed side, but transparency is not necessary. In this case, the applied outer voltage may be superimposed with a direct current or an alternate current.

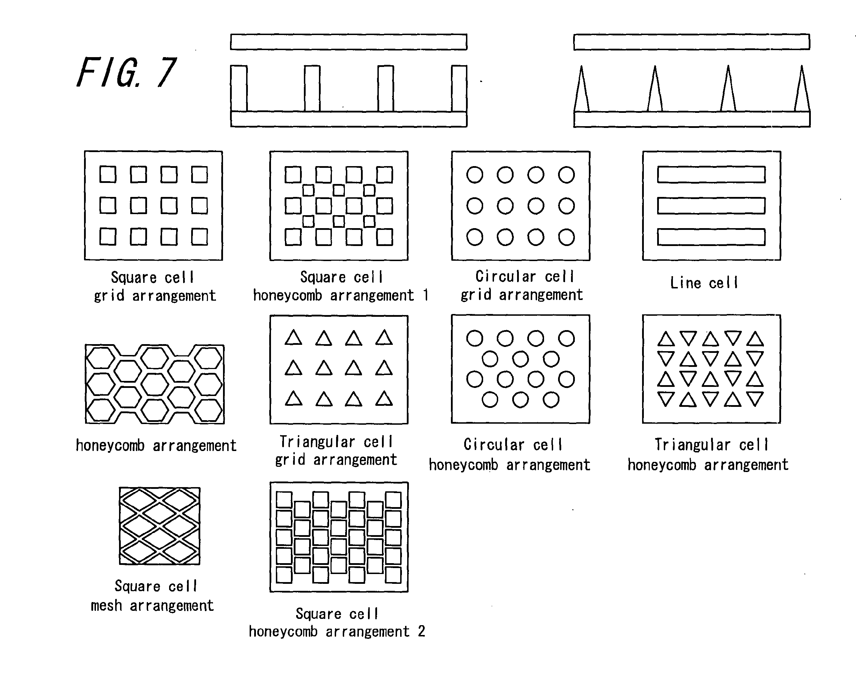

As for the partition wall 4, a shape of the partition wall are suitably designed in accordance with a kind of the display media used for the display, and a shape and an arrangement of the electrode to be arranged, and is not restricted. However, it is preferred to set a width of the partition wall to 2 - 100 µm more preferably 3 - 50 µm and to set a height of the partition wall to 10 - 100 µm more preferably 10 - 50 µm.
Moreover, as a method of forming the partition wall, use may be made of a double rib method wherein ribs are formed on the opposed substrates 1, 2 respectively and they are connected with each other and a single rib method wherein a rib is formed on one of the opposed substrates only. The present invention may be preferably applied to both methods mentioned above.
The cell formed by the partition walls each made of rib has a square shape, a triangular shape, a line shape, a circular shape and a hexagon shape, and has an arrangement such as a grid, a honeycomb and a mesh, as shown in Fig. 7 viewed from a plane surface of the substrate. It is preferred that the portion corresponding to a cross section of the partition wall observed from the display side (an area of the frame portion of the display cell) should be made as small as possible. In this case, a clearness of the image display can be improved.
The formation method of the partition wall is not particularly restricted, however, a die transfer method, a screen-printing method, a sandblast method, a photolithography method and an additive method. Among them, it is preferred to use a photolithography method using a resist film or a die transfer method.

### EXAMPLES

In the examples mentioned below, the information display panel, in which the display media constituted by the particles including conductive particles are sealed between two glass substrates on which the electrode pattern is formed respectively, were manufactured.

### <Example 1>

Conductive particles having a diameter of 43 µm made of acrylic particle, a surface of which is coated by gold, were dispersed in a sealing agent (sealing agent : particles = 10 : 1 by weight ratio) to form the anisotropic conductive sealing agent. The anisotropic conductive sealing agent was used for the information display panel having a gap between opposed electrodes of 40 µm.

### <Example 2>

Conductive particles having a diameter of 33 µm made of acrylic particle, a surface of which is coated by gold, were dispersed in a sealing agent (sealing agent : particles = 10 : 1 by weight ratio) to form the anisotropic conductive sealing agent. The anisotropic conductive sealing agent was used for the information display panel having a gap between opposed electrodes of 30 µm.

### <Example 3>

Conductive particles having a diameter of 40 µm made of acrylic particle, a surface of which is coated by gold, were dispersed in a sealing agent (sealing agent : particles = 10 : 1 by weight ratio) to form the anisotropic conductive sealing agent. The anisotropic conductive sealing agent was used for the information display panel having a gap between opposed electrodes of 40 µm,

### <Example 4>

Conductive particles having a diameter of 48 µm made of acrylic particle, a surface of which is coated by gold, were dispersed in a sealing agent (sealing agent : particles = 10 : 1 by weight ratio) to form the anisotropic conductive sealing agent. The anisotropic conductive sealing agent was used for the information display panel having a gap between opposed electrodes of 40 µm.

In all the examples 1 - 4, since the information display panel has a construction such that the sealing agent including the conductive particles is not arranged to a portion at which the conductive wirings are arranged, it is possible to obtain the information display panel, in which no leak occurs between adjacent conductive wires and thus excellent display can be performed.

### INDUSTRIAL APPLICABILITY

The information display panel according to the invention is applicable to the display unit for mobile equipment such as notebook personal computers, electronic diary, portable information device called as PDA (Personal Digital Assistants), cellular phones, handy terminal and so on; to the electric paper for electric book, electric newspaper and so on; to the bulletin boards such as signboards, posters, blackboards (whiteboards) and so on; to the image display unit for electric calculator, home electric application products, auto supplies and so on; to the card display unit for point card, IC card and so on; and to the display unit for electric advertisement, information board, electric POP (Point Of Presence, Point Of Purchase advertising), electric price tag, electric shelf tag, electric musical score, RF-ID device and so on, and further to the display unit for an electric device such as POS terminal, car-navigation device, clock and so on. Moreover, it is preferably used to the display unit (rewritable paper) in which display rewriting is performed by connecting with the external rewriting means.

As the display media, use may be made of the display media of various types which are electrically driven through the electrodes, such as particles including conductive particles, particles including semiconductor particles, in addition to the particles including charged particles explained above. As to a driving method of the information display panel according to the invention, use is made of a display panel of simple matrix driving type and a display panel of static driving type, in which no switching element is used, or, a display panel of active matrix driving type, in which three-terminal switching element such as thin-film transistor (TFT) or two-terminal switching element such as thin-film diode (TFD). In this manner, the present invention can be applied to the information display panel of various driving types.

## Claims

1. An information display panel having an information display portion, in which a voltage is applied between pixel electrodes arranged respectively to substrates and display media are driven so as to display information such as an image, **characterized in that** the information display panel comprises:
an electrode-wiring concentrated portion in which electrode-wirings derived from the pixel electrodes on both substrates are concentrated at the outer side of the information display portion so as to connect with a connecting terminal portion used for connecting with an external driving circuit; and
a frame rib arranged outside of the information display portion;
wherein the electrode-wirings connected to the pixel electrodes arranged on one substrate are electrically connected to the electrode-wirings on the other substrate, at the outer side of the information display portion by using a sealing agent including conductive particles,
wherein a width of the frame rib corresponding to the electrode-wiring concentrated portion is formed wider than that of the other portion of the frame rib, and
wherein the sealing agent including conductive particles is arranged at a portion other than the electrode-wiring concentrated portion.

2. The information display panel according to claim 1, **characterized in that** a space between the substrates of the panel arranged between the sealing agent including conductive particles and the frame rib, which is formed at an end portion of the panel, is sealed by a sealing agent.

3. An information display panel having an information display portion, in which a voltage is applied between pixel electrodes arranged respectively to substrates and display media are driven so as to display information such as an image, **characterized in that** the information display panel comprises:
an electrode-wiring concentrated portion in which electrode-wirings derived from the pixel electrodes on both substrates are concentrated at the outer side of the information display portion so as to connect with a connecting terminal portion used for connecting with an external driving circuit; and
a frame rib arranged outside of the information display portion;
wherein the electrode-wirings connected to the pixel electrodes arranged on one substrate are electrically connected to the electrode-wirings on the other substrate, at the outer side of the information display portion by using a sealing agent including conductive particles,
wherein an opening at an end portion of the substrate corresponding to the electrode-wiring concentrated portion is filled by a moisture-proof material, and
wherein the sealing agent including conductive particles is arranged at a portion other than the electrode-wiring concentrated portion.

4. The information display panel according to claim 3, **characterized in that** a space between the substrates of the panel arranged between the sealing agent including conductive particles and the moisture-proof material, which is formed at an end portion of the panel, is sealed by a sealing agent.

5. An information display panel having an information display portion, in which a voltage is applied between pixel electrodes arranged respectively to substrates and display media are driven so as to display information such as an image, **characterized in that** the information display panel comprises:
an electrode-wiring concentrated portion in which electrode-wirings derived from the pixel electrodes on both substrates are concentrated at the outer side of the information display portion so as to connect with a connecting terminal portion used for connecting with an external driving circuit; and
a frame rib arranged outside of the information display portion;
wherein the electrode-wirings connected to the pixel electrodes arranged on one substrate are electrically connected to the electrode-wirings on the other substrate, at the outer side of the information display portion by using a sealing agent including conductive particles,
wherein a width of the frame rib corresponding to the electrode-wiring concentrated portion is formed wider than that of the other portion of the frame rib,
wherein an opening at an end portion of the substrate corresponding to the electrode-wiring concentrated portion is filled by a moisture-proof material, and
wherein the sealing agent including conductive particles is arranged at a portion other than the electrode-wiring concentrated portion.

6. The information display panel according to claim 5, **characterized in that** a space between the substrates of the panel arranged between the sealing agent including conductive particles and the frame rib, and, a space between the substrates of the panel arranged between the sealing agent including conductive particles and the moisture-proof material, which are formed at an end portion of the panel, are sealed by a sealing agent.
